# EUROPÄISCHE PATENTSCHRIFT

(11) **EP 0 992 376 B1**
(45) Veröffentlichungstag und Bekanntmachung des Hinweises auf die Patenterteilung: **11.06.2003**
(21) Anmeldenummer: 99118158.7
(22) Anmeldetag: 11.09.1999
(51) Int. Cl.: B60G 21/10, B60G 21/055

(54) **Stabilisierungseinrichtung für ein Fahrzeug**
Stabilizing device for a vehicle
Dispositif de stabilisation pour un véhicule

(30) Priorität: 08.10.1998 DE 19846394
(43) Veröffentlichungstag der Anmeldung: 12.04.2000
(73) Patentinhaber: Bayerische Motoren Werke Aktiengesellschaft, 80809 München (DE)
(72) Erfinder: Bruns, Hartmut, 81929 München (DE); Nagy, Imre, 85386 Eching (DE); Van der Knaap, Albert, 86558 Hohenwart (DE); Benedek, Andreas, Dr., 85716 Unterschleissheim (DE)

(56) Entgegenhaltungen:
- DE-A- 19 549 385
- DE-A- 19 622 964
- DE-A- 19 646 500
- DE-A- 19 649 187
- US-A- 4 844 506

## Beschreibung

Die Erfindung betrifft eine Stabilisierungseinrichtung für ein Fahrzeug, mit den im Oberbegriff des Patentanspruches 1 angegebenen Merkmalen.

Eine derartige Stabilisierungseinrichtung ist in dem Gebrauchsmuster DE 296 19 567 U1 zur Rollstabilisierung eines Fahrzeugs verwendet und weist einen Aktuator auf, der beispielsweise durch einen Schwenkmotor mit zwei Arbeitskammern gebildet ist, in die jeweils eine Hydraulikleitung mündet. Um eine Rollstabilisierung zu bewirken, ist über eine Reihenschaltung eines Sicherheitsventils und eines Schaltventils eine Hydraulikleitung mit einer Druckleitung und die andere Hydraulikleitung mit einer Tankleitung zu verbinden. Hierzu ist das Sicherheitsventil durch entsprechende Ansteuerung aus seiner stromlosen Sperrstellung in eine die beiden Hydraulikleitungen öffnende Durchlaßstellung zu verstellen und das Schaltventil in die eine oder andere Lage zu verlagern, in der eine Hydraulikleitung mit der Druckleitung und die andere Hydraulikleitung mit der Tankleitung verbunden sind. Das Sicherheitsventil dürfte in seiner Sperrstellung die Hydraulikleitungen nicht vollkommen verschließen. Dies kann zu einem Leerlaufen des Schwenkmotors führen. Nach einer längeren Fahrzeit mit in Sicherungsstellung befindlichem Sicherheitsventil können sich deshalb bei expandierenden Arbeitskammem Lufteinschlüsse in den Arbeitskammem bilden, wodurch der Schwenkmotor beschädigt werden kann. Auch bei in Durchlaßstellung geschaltetem Sicherheitsventil können sich Lufteinschlüsse in den expandierenden Arbeitskammern (Ausfedervorgänge) des Aktuators bilden, wenn Hydraulikflüssigkeit bei zu geringer Leistung der die Druckleitung mit Druck beaufschlagenden Pumpe nicht ausreichend schnell nachströmen kann oder der Strömungswiderstand der Hydraulikleitung bzw. der Ventile hierfür zu groß ist. Die Lufteinschlüsse können beispielsweise bei Kurvenfahrt ein einseitiges Einsacken des Fahrzeugs bewirken, wodurch ein sicheres Fahren beeinträchtigt ist. Außerdem kann durch die Lufteinschlüsse die Momentenverteilung zwischen der Vorderachse und der Hinterachse ungünstig beeinflußt werden, wodurch sich ein nicht vorhersehbares Fahrverhalten des Fahrzeugs mit einer sich ändernden oder wechselnden Über- oder Untersteuertendenz einstellen kann.

Der Erfindung liegt die Aufgabe zugrunde, eine Stabilisierungseinrichtung für ein Fahrzeug mit den im Oberbegriff des Patentanspruches 1 anzugeben, bei der Lufteinschlüsse in den Arbeitskammem des Aktuators weitgehend vermieden sind.

Diese Aufgabe ist durch die im Patentanspruch 1 angegebenen Merkmale gelöst. Vorteilhafte Ausgestaltungen der Erfindung sind den Unteransprüchen entnehmbar.

Sowohl in der Sicherheitsstellung als auch in den Durchlaßstellungen der Schaltventilanordnung kann eine expandierende Arbeitskammer des Aktuators über die zugeordnete Nachsaugleitung Hydraulikflüssigkeit nachsaugen, beispielsweise wenn die Hydraulikleitungen gesperrt sind oder die Druckleitung nicht ausreichend mit Druck beaufschlagt ist, bzw. der Strömungswiderstand in der Hydraulikleitung oder in der Schaltventilanordnung zu hoch ist. Lufteinschlüsse und Kavitation in den expandierenden Arbeitskammem sind dadurch weitgehend vermieden. Die Schaltventilanordnung kann durch ein einfaches Ventil oder einfache Ventile gebildet sein.

Zwei Ausführungsbeispiele der Erfindung werden anhand einer Zeichnung näher erläutert. Es zeigen
- Fig.1: ein vereinfachtes Schaltbild einer stromlosen Stabilisierungseinrichtung, mit zwei in Parallelschaltung angeordneten Druckregelventilen,
- Fig.2: eine Figur 1 entsprechende Ansicht einer alternativen Ausführung mit zwei in Reihenschaltung angeordneten Druckregelventilen,
- Fig.3: eine Fig.1 entsprechende Ansicht mit in Sperrstellung der Schaltventilanordnung gekennzeichneten Nachsaugwegen,
- Fig.4: eine Fig. 1 entsprechende Ansicht in Durchlaßstellung der Schaltventilanordnung mit den bei Geradeausfahrt am Vorderachs-Aktuator wirksamen, gekennzeichneten Nachsaugwegen,
- Fig.5: eine Fig. 4 entsprechende Ansicht mit den bei Geradeausfahrt am weiteren Aktuator (Hinterachs-Aktuator) wirksamen, gekennzeichneten Nachsaugwegen,
- Fig.6: eine Fig. 4 entsprechende Ansicht, mit bei Kurvenfahrt an den Aktuatoren wirksamen, gekennzeichneten Nachsaugwegen in den Leitungen der Vorder- und Hinterachse und
- Fig.7: eine Fig.6 entsprechende Ansicht, mit bei Kurvenfahrt an den Aktuatoren wirksamen, gekennzeichneten Nachsaugwegen in den zum Tank führenden Leitungen der Vorder- und Hinterachse.

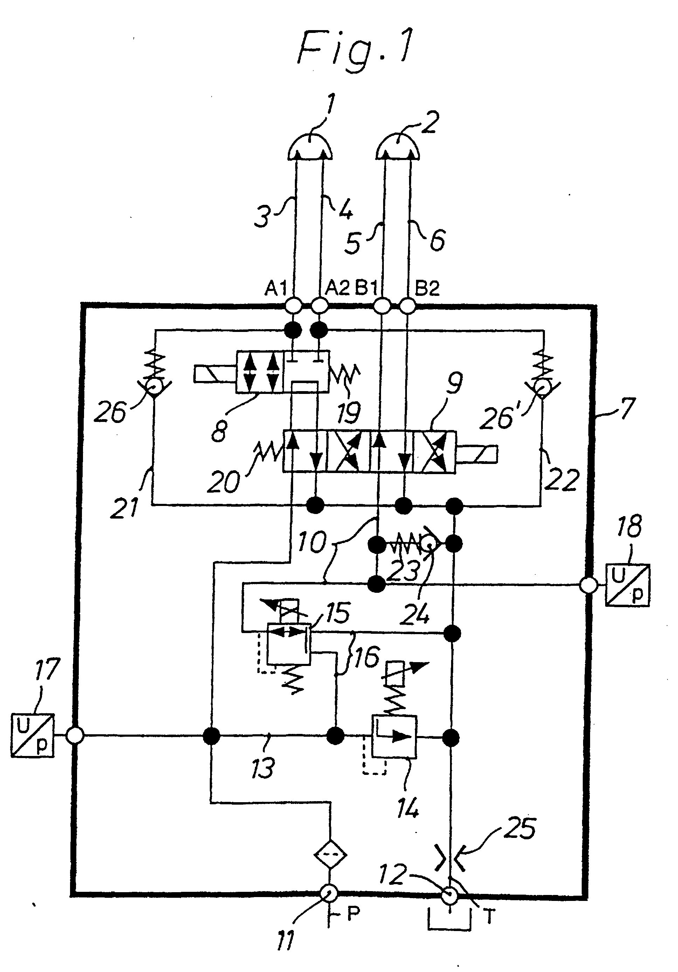

Die in Figur 1 vereinfacht dargestellte Stabilisierungseinrichtung ist zur Rollstabilisierung eines Kraftfahrzeugs vorgesehen und weist zwei Aktuatoren 1, 2 auf, die von Schwenkmotoren gebildet sind. Der Aktuator 1 ist der Vorderachse und der Aktuator 2 der Hinterachse des Kraftfahrzeugs zugeordnet. Jeder Aktuator 1, 2 kann zwei Stabilisatorschenkel in die eine oder andere Richtung entgegengesetzt verdrehen bzw. mit einem entgegengesetzten Moment beaufschlagen. Hierzu weist jeder Aktuator 1, 2 zwei von einem verstellbaren Arbeitskolben getrennte Arbeitsräume auf, in die jeweils eine Hydraulikleitung 3, 4 bzw. 5, 6 münden. An den Stellen A1, A2 bzw. B1, B2 sind die Hydraulikleitungen 3, 4 bzw. 5, 6 an einen Ventilblock 7 angeschlossen, der durch eine dicke Umrißlinie gekennzeichnet ist. Zwischen dem Aktuator 1 und einer Druckleitung P sowie einer Tankleitung T ist eine Schaltventilanordnung vorgesehen, die durch eine Reihenschaltung eines Sicherheitsventils 8 und eines Schaltventils 9 gebildet ist. Im stromlosen Zustand nimmt das Sicherheitsventil 8 die in der Figur dargestellte Lage ein, in der die Hydraulikleitungen 3, 4 von der Druckleitung P und der Tankleitung T getrennt sind. Das stromlose Schaltventil 9 ist wie dargestellt auf Durchlaß geschaltet und kann in einer zweiten Schaltstellung die Hydraulikleitungen 3, 4 zur ersten Schaltstellung umgekehrt mit der Tankleitung T und der Druckleitung P verbinden. Zwischen dem Aktuator 2 und der Druckleitung P sowie der Tankleitung T ist ein zweiter Teil des Schaltventils 9 angeordnet, der in einer ersten, dargestellten Schaltstellung die Hydraulikleitung 5 des zweiten Aktuators 2 mit der Druckleitung P, bzw. einer davon abzweigenden zweiten Druckleitung 10 und die zweite Hydraulikleitung 6 mit der Tankleitung T bzw. in einer zweiten Schaltstellung umgekehrt verbindet. Nahe dem Druckanschluß 11 und dem Tankanschluß 12 sind die Druckleitung P und die Tankleitung T über eine Verbindungsleitung 13 verbunden, in der zur Druckregelung der zum Aktuator 1 führenden Druckleitung P ein Druckregelventil 14 angeordnet ist. Parallel zu dem Druckregelventil 14 ist ein zweites Druckregelventil 15 angeordnet, das in einer die Verbindungsleitung 13 und die Tankleitung T verbindenden Nebenleitung 16 angeordnet ist und ein Einstellen des Druckes in der vom zweiten Druckregelventil 15 abgehenden und zum zweiten Aktuator 2 führenden zweiten Druckleitung 10 ermöglicht. Bei dieser Anordnung ist der in der zweiten Druckleitung 10 anstehende Druck kleiner oder gleich dem Druck in der Druckleitung P, der über den Druckaufnehmer 17 erfaßt wird. Den Druck in der zweiten Druckleitung 10 erfaßt der Druckaufnehmer 18.

Tritt im Fahrbetrieb eine Störung auf, die von einem Element der Stabilisierungseinrichtung oder einer anderen Einrichtung erfaßt wird, oder bei einem Stromausfall, werden das Sicherheitsventil 8 und das Schaltventil 9 stromlos, die durch die Kraft der Federn 19, 20 in die dargestellten Ausgangslagen gebracht werden, in der die Hydraulikleitungen 3, 4 von der Druckleitung P und der Tankleitung T getrennt sind. Das Sicherheitsventil 8 kann in seiner dargestellten Sicherheitsstellung auch bei einer Ausbildung als Sitzventil die Hydraulikleitungen 3, 4 nicht vollkommen dicht verschließen, so daß mit einer zumindest kleinen Leckage zu rechnen ist. Damit eine ' im Fahrbetrieb expandierende Arbeitskammer des Aktuators 1 Hydraulikflüssigkeit aus der mit einem Tank verbundenen Tankleitung T nachsaugen kann, sind an die beiden Hydraulikleitungen 3, 4 jeweils eine Nachsaugleitung 21, 22 angeschlossen, die jeweils nach der durch eine Reihenanordnung des Sicherheitsventils 8 und des Schaltventils 9 gebildeten Schaltventilanordnung mit der betreffenden Hydraulikleitung 3 bzw. 4 und vor der Schaltungsanordnung mit der Tankleitung T verbunden sind. In den Nachsaugleitungen 21, 22 sind jeweils ein zu dem Aktuator 1 öffnendes Rückschlagventil 23 bzw. 24 angeordnet. Die beiden Arbeitskammem des zweiten Aktuators 2 sind unabhängig von dem Sicherheitsventil 8 über das Schaltventil 9 einerseits mit der Druckleitung P bzw. der zweiten Druckleitung 10 und andererseits mit der Tankleitung T zu verbinden. Auf der dem Aktuator 2 abgewandten Seite sind vor dem Schaltventil 9 die zweite Druckleitung 10 und die Tankleitung T über eine Saugleitung 23 verbunden, in der ein zur zweiten Druckleitung 10 öffnendes Rückschlagventil 24 angeordnet ist. In der Tankleitung T ist zwischen dem Schaltventil 9 und dem Tankanschluß 12 eine Drossel 25 angeordnet.

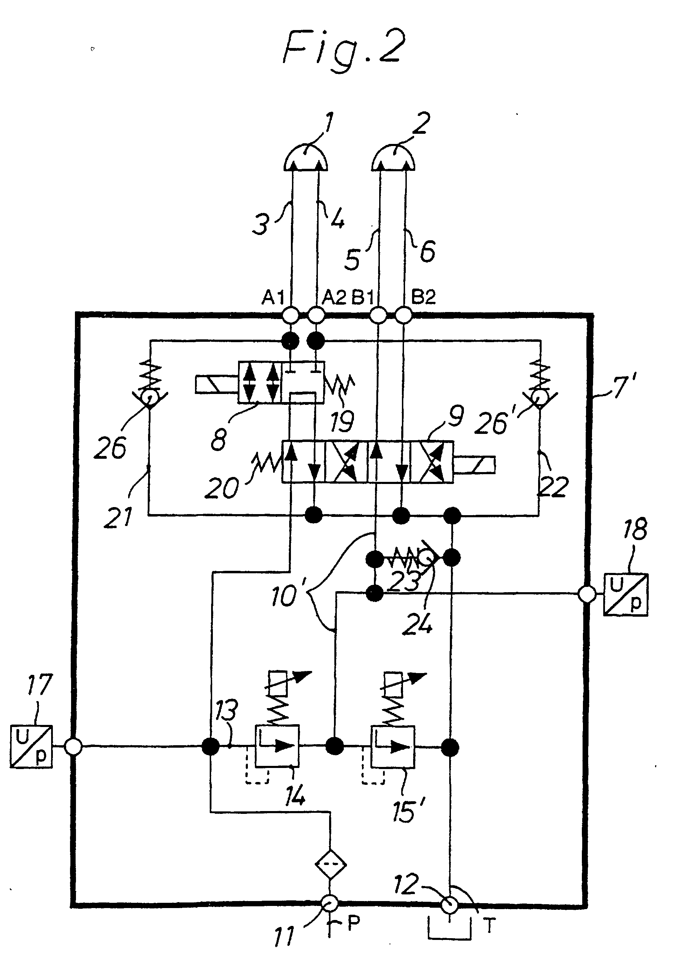

Das zweite Ausführungsbeispiel gemäß Figur 2 ist ähnlich zu dem ersten Ausführungsbeispiel aufgebaut, so daß zur Vermeidung einer wiederholten Beschreibung gleiche oder vergleichbare Bauteile mit einer gleichen Bezugszahl und eventuell zur Unterscheidung mit einem hochgestellten Zeichen versehen sind. Bei dieser zweiten Ausführung befinden sich in der Verbindungsleitung 13 zwei in Reihe angeordnete Druckregelventile 14, 15' und die zweite Druckleitung 10' mündet zwischen den beiden Druckregelventilen14, 15' in die Verbindungsleitung 13. Mit dem Druckregelventil 14 kann der Druck in der Druckleitung P eingestellt werden. Der Druck in der zweiten Druckleitung 10' läßt sich mit dem Druckregelventil 15' einstellen, der bei dieser Anordnung kleiner oder gleich dem Druck in der Druckleitung P ist. Bei dieser Ausführung ist wie bei dem ersten Ausführungsbeispiel in der Tankleitung T zwischen dem Schaltventil 9 und dem Tankanschluß 12 eine Drossel angeordnet, die nicht dargestellt ist. Nachfolgend werden die Nachsaugwege lediglich anhand des ersten Ausführungsbeispiels angegeben, die in analoger Weise auch bei der zweiten Ausführung gegeben sind.

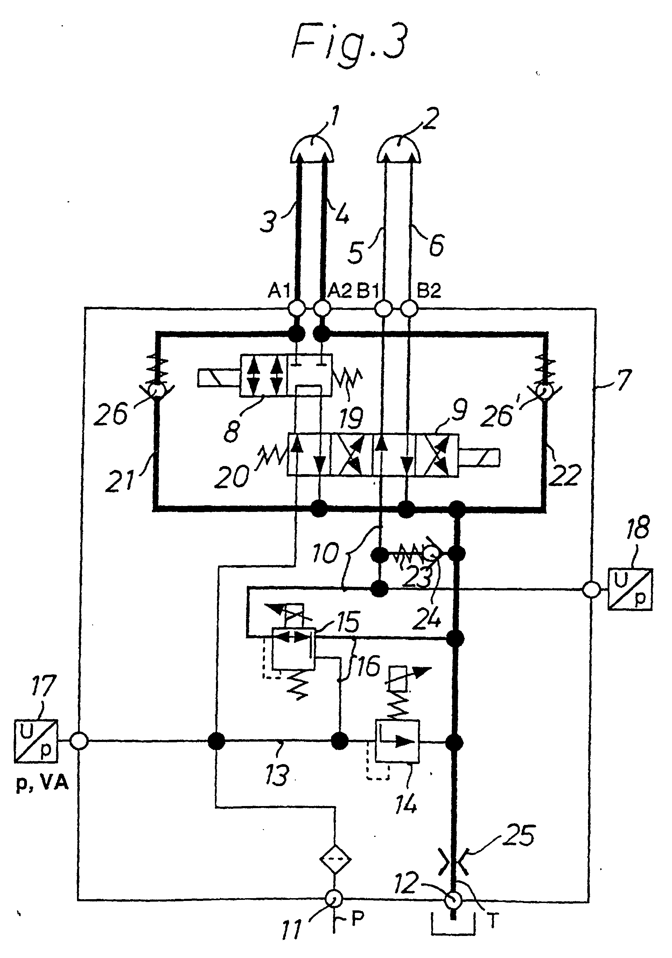

Wie Figur 3 zeigt, kann in der Sicherheitsstellung des Sicherheitsventils 8 eine expandierende Arbeitskammer des Aktuators 1 entlang den stärker gezeichneten Linien über die betreffende Nachsaugleitung 21 oder 22 Hydraulikflüssigkeit aus der Tankleitung T nachsaugen, wodurch Lufteinschlüsse in der betreffenden Arbeitskammer vermieden sind. In der anderen Arbeitskammer des Aktuators 1 wird die Hydraulikflüssigkeit beim Einfedem komprimiert, wobei sich die Hydraulikflüssigkeit an dem betreffenden Rückschlagventil 26 bzw. 26' in der anderen Nachsaugleitung 21 bzw. 22 abstützt. Bei dem der Hinterachse des Fahrzeugs zugeordneten Aktuator 2 erfolgt das Nachsaugen in der ersten Arbeitskammer direkt über die Tankleitung T. In der anderen Arbeitskammer des Aktuators 2 wird die Hydraulikflüssigkeit über das stromlose Druckregelventil 15 oder das Rückschlagventil 24 in der Saugleitung 23 komprimiert. Die Federvorspannung der Rückschlagventile 24, 26, 26' ist so gering wie akustisch und funktionstechnisch möglich ausgelegt, um schon bei kleineren Druckabfällen ein Nachsaugen zu ermöglichen. Es kann deshalb eine größere Leckage an dem Sicherheitsventil 8 hingenommen werden. Die Drossel 25 erhöht die Energiedichte der Hydraulikflüssigkeit in der Tankleitung T zwischen der Drossel 25 und dem Schaltventil 9.

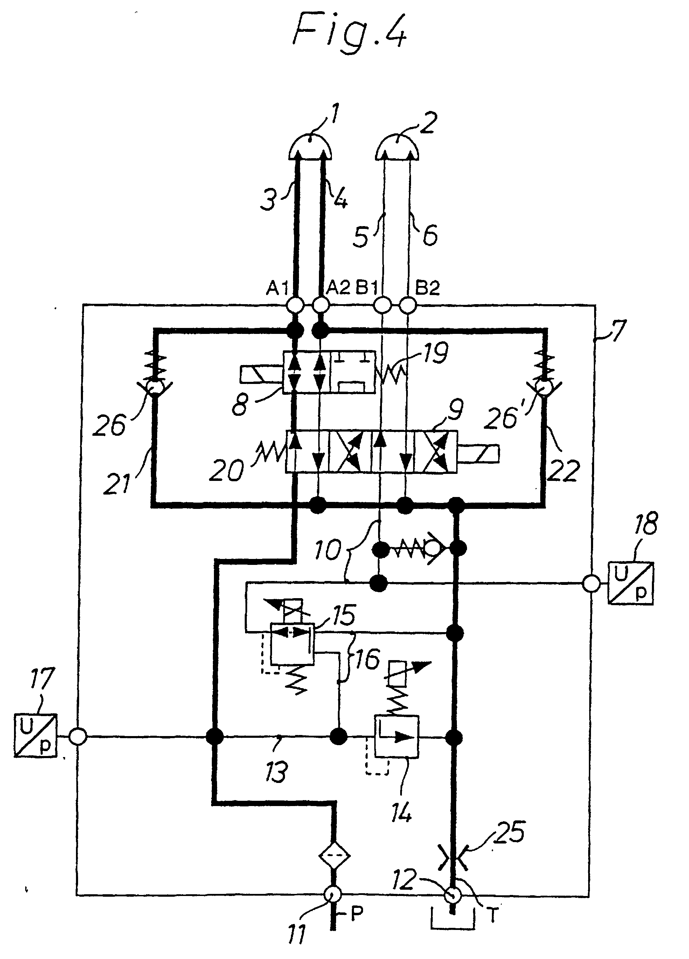

Befindet sich das Sicherheitsventil 8, wie in Figur 4 dargestellt, bei Geradeausfahrt in der Durchlaßstellung, erfolgt das Nachsaugen in die expandierende Arbeitskammer des Aktuators 1 an der Vorderachse je nach Schaltstellung des Schaltventils 9 über die Druckleitung P und außerdem über eine betreffende Nachsaugleitung 21 bzw. 22 und das darin angeordnete Rückschlagventil 26 bzw. 26' und/oder direkt über die Tankleitung T.

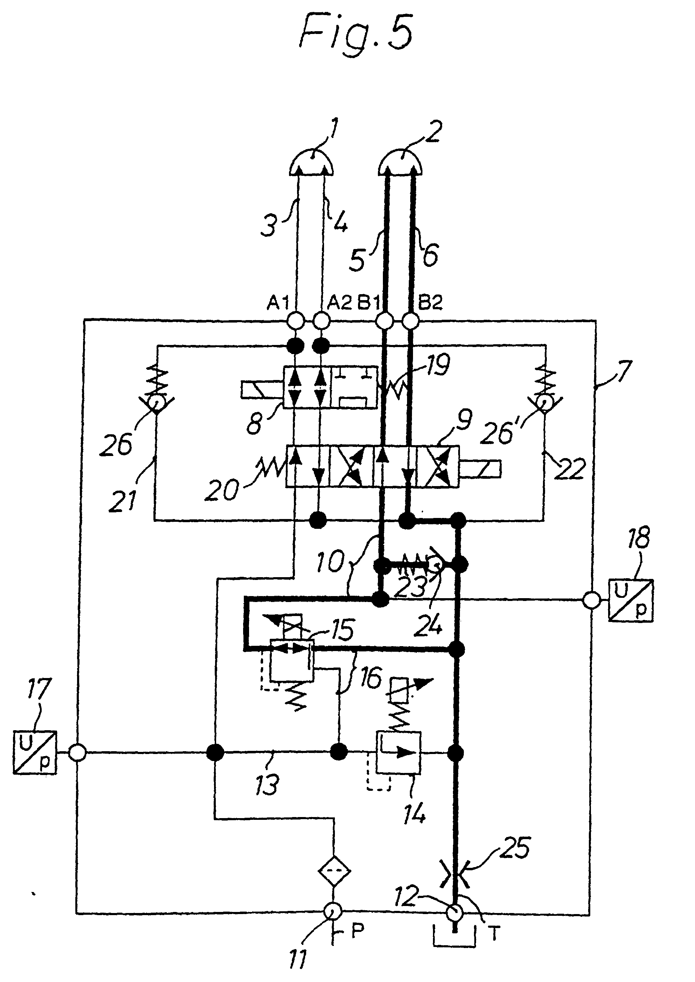

Wie Figur 5 zu entnehmen ist, erfolgt bei Geradeausfahrt an dem der Hinterachse zugeordneten Aktuator 2 das Nachsaugen in eine expandierende Arbeitskammer des Aktuators 2 je nach Schaltstellung des Schaltventils 9 entweder direkt aus der Tankleitung oder über das Druckregelventil 15 und die Saugleitung 23.

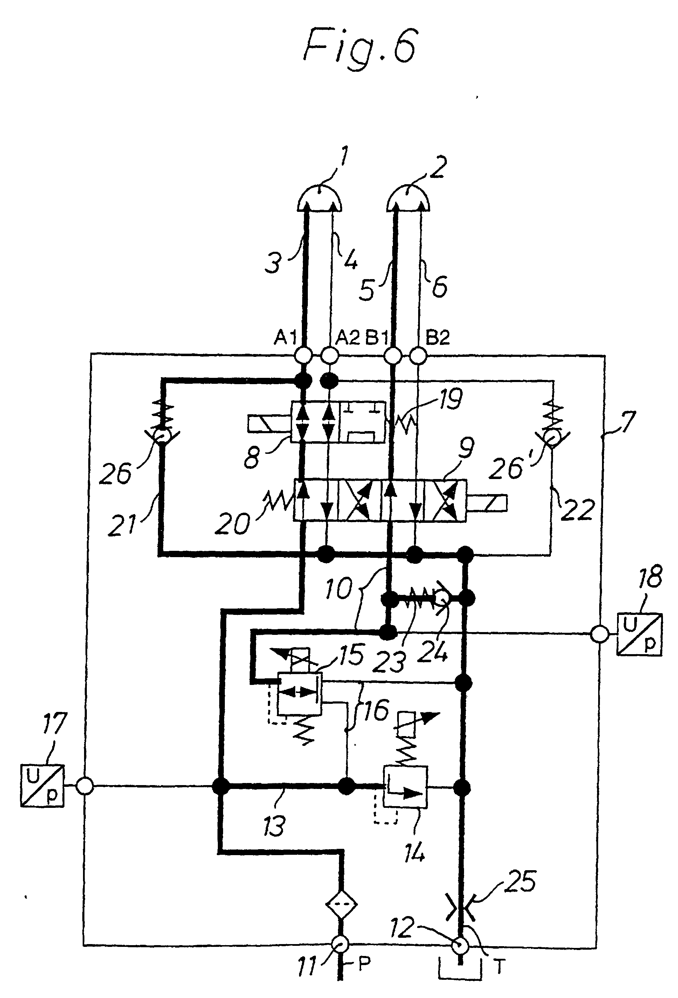

Figur 6 veranschaulicht das bei Kurvenfahrt mögliche Nachsaugen in die expandierenden Arbeitskammern der beiden Aktuatoren. Bei Kurvenfahrt wird auf der kurvenäußeren Seite über die an die Druckleitung P angeschlossene Pumpe und die Druckregelventile 14, 15 ein das Fahrzeug stabilisierender Druck in den betreffenden Arbeitskammern der Aktuatoren 1, 2 aufgebaut. Auf der kurvenäußeren Seite der Vorderachse kann beispielsweise aufgrund von Fahrbahnunebenheiten ein größerer Volumenstrom der Hydraulikflüssigkeit erforderlich sein, als die an die Druckleitung angeschlossene Pumpe liefern kann. Der erforderliche Volumenstrom an der Vorderachse kann in diesem Fall einerseits über das Schaltventil 9 und das Sicherheitsventil 8 und andererseits über die Nachsaugleitung 21, bzw. an der Hinterachse über die Saugleitung 23 bei geschlossener Stellung des Druckregelventils 15 in die betreffende Arbeitskammer strömen.

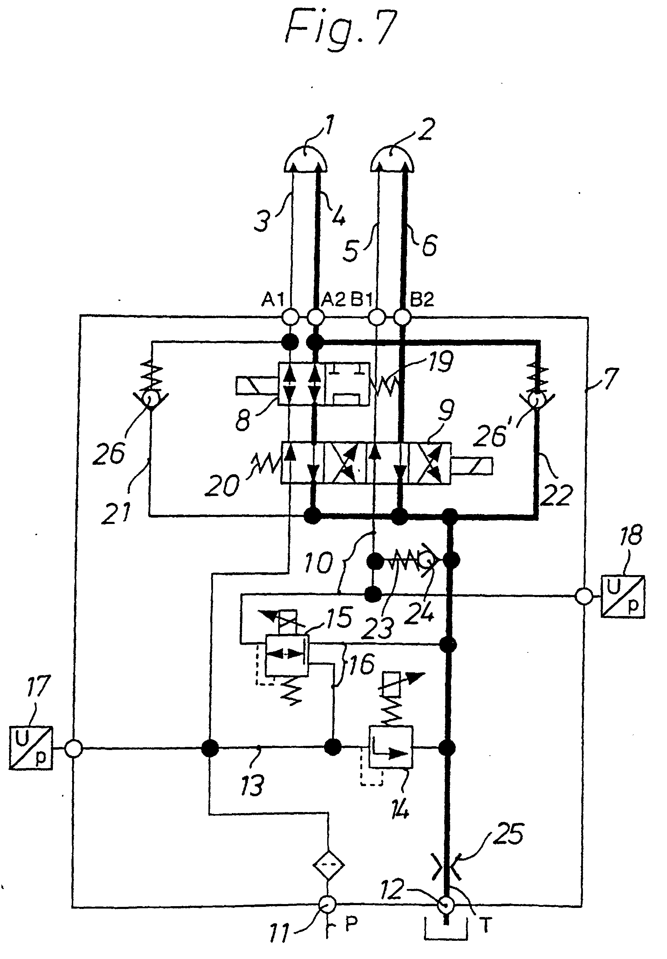

In Figur 7 sind die Nachsaugwege bei einer Kurvenfahrt auf der kurveninneren Seite dargestellt. Hydraulikflüssigkeit kann in die betreffende expandierende Arbeitskammer an der Vorderachse aus der Tankleitung T über das Sicherheitsventil 8 und das Schaltventil 9 und außerdem über eine betreffende Nachsaugleitung 22 und das darin angeordnete Rückschlagventil 26' sowie an der Hinterachse über das Schaltventil 9 direkt aus der Tankleitung T nachströmen.

Die Schaltventilanordnung kann auch ein einziges Ventil oder mehrere Ventile umfassen, die einen von den beiden Ausführungsbeispielen abweichenden Aufbau aufweisen können. Die Zahl der Hydraulikanschlüsse und Schaltstellungen der verwendeten Ventile kann von den Ausführungsbeispielen abweichen. Bei dem ersten Ausführungsbeispiel wird durch die in der Tankleitung angeordnete Drossel die Energiedichte der Hydraulikflüssigkeit in der Tankleitung erhöht, wodurch Hydraulikflüssigkeit leichter aus der Tankleitung in eine expandierende Arbeitskammer gesaugt werden kann. Anstelle einer Tankleitung können auch mehrere Tankleitungen verwendet sein. Bei Verwendung von zwei Aktuatoren, beispielsweise an der Vorderund Hinterachse eines Kraftfahrzeugs, können die Arbeitskammern des zweiten Aktuators (an der Hinterachse) in Abänderung der zweiten Ausführung gemäß Figur 2 über das Sicherheitsventil oder ein weiteres Sicherheitsventil und das Schaltventil oder ein weiteres Schaltventil einerseits mit der Druckleitung oder einer weiteren Druckleitung und andererseits mit der Tankleitung oder einer weiteren Tankleitung verbindbar sind.

## Patentansprüche

1. Stabilisierungseinrichtung für ein Fahrzeug, mit einem Aktuator **(1)**, der zwei von einem verstellbaren Arbeitskolben getrennte Arbeitskammern aufweist, in die jeweils eine Hydraulikleitung mündet, von denen eine Hydraulikleitung **(3, 4)** über eine Schaltventilanordnung **(8, 9)** mit einer Druckleitung **(P)** und die andere Hydraulikleitung **(4, 3) über die Schaltventilanordnung (8, 9)** mit einer Tankleitung **(T)** verbindbar sind, **dadurch gekennzeichnet, daß** den beiden Hydraulikleitungen **(3, 4)** jeweils eine Nachsaugleitung **(21, 22)** zugeordnet ist, die nach der Schaltventilanordnung (8, 9) mit der Hydraulikleitung (3, 4) und vor der Schaltventilanordnung (8, 9) mit der Tankleitung (T) oder einer weiteren Tankleitung verbunden ist und in der sich **jeweils** ein zum Aktuator (1) öffnendes Rückschlagventil (26, 26') befindet.

2. Stabilisierungseinrichtung für ein Fahrzeug nach Anspruch 1, **dadurch gekennzeichnet, daß** die Schaltventilanordnung ein Sicherheitsventil (8) und ein dazu in Reihe angeordnetes Schaltventil (9) aufweist und die beiden Hydraulikleitungen (3, 4) einerseits mit der Druckleitung (P) und andererseits mit der Tankleitung (T) verbunden sind, wenn das Sicherheitsventil (8) aus seiner stromlosen Sperrstellung in eine die beiden Hydraulikleitungen (3, 4) öffnende Durchlaßstellung verstellt ist und das Schaltventil (9) je nach Schaltstellung eine Hydraulikleitung (**3**, **4** ) mit der Druckleitung (P) oder einer weiteren Druckleitung (10, 10') und die andere Hydraulikleitung (**4**, **3**) mit der Tankleitung (T) oder einer weiteren Tankleitung bzw. in einer anderen Schaltstellung des Schaltventils (9) umgekehrt verbindet.

3. Stabilisierungseinrichtung nach Anspruch 2, **dadurch gekennzeichnet, daß** in der zu einem Tank führenden Tankleitung (T) zwischen dem Schaltventil (9), den Druckregelventilen (14,15) und dem Tank eine Drossel (25) angeordnet ist.

4. Stabilisierungseinrichtung nach einem der Ansprüche **2** bis 3, mit einem zweiten Aktuator (2), **dadurch gekennzeichnet, daß** die beiden Arbeitskammern des zweiten Aktuators (2) unabhängig von dem Sicherheitsventil (8) über das Schaltventil (9) oder ein weiteres Schaltventil einerseits mit der Druckleitung (P) oder einer weiteren Druckleitung (10, 10') und andererseits mit der Tankleitung (T) oder einer weiteren Tankleitung verbindbar sind.

5. Stabilisierungseinrichtung nach einem der Ansprüche **2** bis 3, mit einem zweiten Aktuator **(2)**, **dadurch gekennzeichnet, daß** die beiden Arbeitskammern des zweiten Aktuators **(2)** über das Sicherheitsventil **(8)** oder ein weiteres Sicherheitsventil und das Schaltventil**(9)** oder ein weiteres Schaltventil einerseits mit der Druckleitung **(P)** oder einer weiteren Druckleitung und andererseits mit der Tankleitung **(T)** oder einer weiteren Tankleitung verbindbar sind.

6. Stabilisierungseinrichtung nach Anspruch 4 oder 5, **dadurch gekennzeichnet, daß** auf der dem zweiten Aktuator (2) abgewandten Seite vor dem Schaltventil (9) bzw. weiteren Schaltventil die Tankleitung (T) bzw. weitere Tankleitung und die Druckleitung bzw. weitere Druckleitung (10, 10') über eine Saugleitung (23) verbunden sind, in der ein zur Druckleitung bzw. weiteren Druckleitung (10, 10') öffnendes Rückschlagventil (24) angeordnet ist.

7. Stabilisierungseinrichtung nach einem der Ansprüche 1 bis 6, **dadurch gekennzeichnet, daß** der Aktuator (1) und gegebenenfalls der zweite Aktuator (2) jeweils ein Schwenkmotor sind, der zwei mit Radträgern oder Radführungselementen verbundene Stabilisatorarme in die eine oder andere Richtung entgegengesetzt verdrehen bzw. mit einem entgegengesetzten Drehmoment beaufschlagen kann.

8. Stabilisierungseinrichtung nach einem der Ansprüche 1 bis 7, **dadurch gekennzeichnet, daß** der Aktuator (1) der Vorderachse eines Fahrzeugs und gegebenenfalls der zweite Aktuator (2) der Hinterachse des Fahrzeugs zugeordnet sind.

## Claims

1. Stabilising device for a vehicle, with an actuator (1), which features two working chambers separated by an adjustable working piston, into each of which a hydraulic line opens, one of said hydraulic lines (3, 4) being connectable via a control valve arrangement (8, 9) with a pressure line P and the other hydraulic line (4,3) being connectable via the control valve arrangement (8, 9) with a tank line (T), **characterised in that** a suction line (21, 22) is assigned to each of the two hydraulic lines (3, 4) which his connected after the control valve arrangement (8, 9) with the hydraulic line (3, 4) and before the control valve arrangement (8, 9) with the tank line (T) or with an additional tank line, and in which a non-return valve (26, 26') opening to the actuator (1) is located.

2. Stabilising device for a vehicle in accordance with claim 1, **characterised in that** the control valve arrangement features a safety valve (8) and a control valve (9), arranged in series, and the two hydraulic lines (3, 4) are connected with the pressure line (P) on the one hand and with the tank line (T) on the other when the safety valve (8) is switched from its currentless closed position into an open position which opens the two hydraulic lines (3, 4) and, depending on the switch position, the control valve (9) connects a hydraulic line (3, 4) with the pressure line (P) or an additional pressure line (10, 10') and the other hydraulic line (4, 3) with the tank line (T) or an additional tank line or, in a different switch position of the control valve (9), vice versa.

3. Stabilising device in accordance with claim 2, **characterised in that** a choke (25) is arranged in the tank line (T) leading to a tank, between the control valve (9), pressure regulating valves (14, 15) and the tank.

4. Stabilising device in accordance with one of claims 2 to 3, with a second actuator (2), **characterised in that** the two working chambers of the second actuator (2) can be connected, independently of the safety valve (8), via the control valve (9) or an additional control valve, with the pressure line (P) or an additional pressure line (10, 10'), on the one hand, and with the tank line (T) or an additional tank line on the other hand.

5. Stabilising device in accordance with one of claims 2 to 3, with a second actuator (2), **characterised in that** the two working chambers of the second actuator (2) can be connected via the safety valve (8) or an additional safety valve and the control valve (9) or an additional control valve, with the pressure line (P) or an additional pressure line, on the one hand, and with the tank line (T) or an additional tank line on the other hand.

6. Stabilising device in accordance with claim 4 or 5, **characterised in that**, on the side facing away from the second actuator (2), before the control valve (9) or additional control valve, the tank line (T) or additional tank line and the pressure line or additional pressure line (10, 10') are connected via a suction line (23) in which a non-return valve (24) opening to the pressure line or additional pressure line (10, 10') is arranged.

7. Stabilising device in accordance with one of claims 1 to 6, **characterised in that** the actuator (1), and if applicable the second actuator (2), is a rotary motor which can counterrotate two stabiliser arms fitted with wheel carriers or wheel-guiding elements in one or other direction or apply a contrary torque to them.

8. Stabilising device in accordance with one of claims 1 to 7, **characterised in that** the actuator (1) is assigned to the front axle of a vehicle and, if applicable, the second actuator (2) is assigned to the rear axle of the vehicle.

## Revendications

1. Installation de stabilisation d'un véhicule comprenant un actionneur (1) ayant deux chambres de travail séparées par un piston de travail réglable et dans lesquelles débouche chaque fois une conduite hydraulique, dont une conduite hydraulique (3, 4) est reliée par un distributeur de commutation (8, 9) à une conduite de pression (P) et l'autre conduite hydraulique (4, 3) est reliée par le distributeur de commutation (8, 9) à une conduite de réservoir (T),
**caractérisée en ce que**
les deux conduites hydrauliques (3, 4) comportent chacune une conduite de réaspiration (21, 22) reliées en aval du distributeur de commutation à la conduite hydraulique (3, 4) et en amont du distributeur de commutation avec la conduite de réservoir (T) ou une autre conduite de réservoir, et dans laquelle il y a chaque fois un clapet anti-retour (26, 26') s'ouvrant en direction de l'actionneur (1).

2. Installation de stabilisation d'un véhicule selon la revendication 1,
**caractérisée en ce que**
le dispositif à distributeur de commutation comprend un distributeur de sécurité (8) et un distributeur de commutation (9) en série avec celui-ci et les deux conduites hydrauliques (3, 4) sont reliées, d'une part, à la conduite de pression (P) et, d'autre part, à la conduite de réservoir (T), si le distributeur de sécurité (8) est déplacé de sa position de blocage coupée du courant dans une position passante ouvrant l'une des deux conduites hydrauliques (3, 4), et le distributeur de commutation (9), suivant la position de commutation, relie une conduite hydraulique (3, 4) à la conduite de pression (P) ou une autre conduite de pression (10, 10'), et relie l'autre conduite hydraulique (4, 3) à la conduite de réservoir (T) ou à une autre conduite de réservoir, et inversement pour l'autre position de commutation du distributeur de commutation (9).

3. Installation de stabilisation selon la revendication 2,
**caractérisée en ce que**
la conduite de réservoir (T) reliée au réservoir comporte un organe d'étranglement (25) entre le distributeur de commutation (9), les régulateurs de pression (14, 15) et le réservoir.

4. Installation de stabilisation selon l'une des revendications 2 et 3, comportant un second actionneur (2),
**caractérisée en ce que**
les deux chambres de travail du second actionneur (2) sont reliées indépendamment du distributeur de sécurité (8), par la soupape de commutation (9) ou une autre soupape de commutation, d'une part à la conduite de pression (P) ou à une autre conduite de pression (10, 10'), et d'autre part à la conduite de réservoir (T) ou à une autre conduite de réservoir.

5. Installation de stabilisation selon l'une des revendications 2 et 3, comportant un second actionneur (2),
**caractérisée en ce que**
les deux chambres de travail du second actionneur (2) sont reliées par le distributeur de sécurité (8) ou un autre distributeur de sécurité et par le distributeur de commutation (9) ou un autre distributeur de commutation, d'une part à la conduite de pression (P) ou à une autre conduite de pression et d'autre part à la conduite de réservoir (T) ou une autre conduite de réservoir.

6. Installation de stabilisation selon la revendication 4 ou 5,
**caractérisée en ce que**
du côté opposé au second actionneur (2), en amont du distributeur de commutation (9), ou d'autres distributeurs de commutation, la conduite de réservoir (T) ou d'autres conduites de réservoir et la conduite de pression ou d'autres conduites de pression (10, 10') sont reliées par l'intermédiaire d'une conduite d'aspiration (23) dans laquelle il y a un clapet anti-retour (24) s'ouvrant vers la conduite de pression ou d'autres conduites de pression.

7. Installation de stabilisation selon l'une des revendications 1 à 6,
**caractérisée en ce que**
l'actionneur (1) et le cas échéant le second actionneur (2) sont constitués chaque fois par un moteur pivotant qui peut faire tourner de manière opposée dans l'une ou l'autre direction ou leur appliquer un couple opposé, deux bras de stabilisateur reliés aux supports de roues ou éléments de guidage de roues,

8. Installation de stabilisation selon l'une des revendications 1 à 7,
**caractérisée en ce que**
l'actionneur (1) est associé à l'essieu avant d'un véhicule et le cas échéant le second actionneur (2) est associé à l'essieu arrière du véhicule.
